# EUROPEAN PATENT APPLICATION

(11) **EP 1 496 647 A1**
(43) Date of publication of application: **12.01.2005**
(21) Application number: 03254317.5
(22) Date of filing: 08.07.2003
(51) Int. Cl.: H04L 12/24, H04L 12/56

(54) **Programmable network node configuration**

(71) Applicant: HITACHI EUROPE LIMITED, Maidenhead, Berkshire, SL6 8YA (GB)
(72) Inventor: Suzuki, Toshiaki, Kunitachi-shi Tokyo 186-0011 (JP); Kitahara, Chiho, Tokyo 177-0041 (JP)
(74) Representative: Read, Matthew Charles

(57) **Abstract**

A network node 100 comprises classifiers and schedulers arranged hierarchically in two or more layers. A first layer comprises one or more parent classifiers 51, 56 and parent schedulers 52, 57. A second layer comprises further classifiers 60, 65, 70, 75 and schedulers 62, 67, 72, 77. A node provider NP may grant access rights for components in the second layer, e.g. a user SP(A1) may be allowed to configure classifier(A1) 60, multiple queue(A1) 61 and scheduler(A1) 62. The parent classifier(A) 51 dispatches incoming data owned by SP(A1) to classifier(A1) 60. The parent scheduler(A) outputs data from scheduler(A1) 62 to an outside network. Therefore, input and output data flows are controlled by NP through the parent classifiers 51, 56 and parent schedulers 52, 57. The output bandwidth assigned to a user is fixed, regardless of configuration of the second layer components, some of which may be owned by other users SP(A2) or SP(B1) or SP(B2). A user can therefore configure certain node components without approval or intervention from NP, facilitating partitioning of node components between multiple users.

## Description

The invention relates to a programmable network node configuration and node apparatus for providing an interface that allows a node user to configure the node without intervention from a network node provider.

Differentiated Services (Diffserv) is a known framework for transmitting Internet Protocol (IP) packets, based on a priority that is specified by a Differentiated Services Code Point (DSCP) in their IP header. For example, if there is substantial delay or jitter in a transmission network due to network congestion, video data delivered through the network will suffer some corruption. On the other hand, a home page may be successfully delivered even if such delay or jitter is present. Therefore, it is desirable to transmit the video data with a priority higher than that of the home page data.

The Diffserv framework solves this problem by allowing the video data and home page data to be assigned different priorities. However, the number specified by the DSCP is a global number for specifying priority across the Internet. For this reason, a user of a network node cannot assign or change a particular DSCP number for a data flow without intervention from a network provider, even if the flow belongs to the user. In addition, the user can only change the bandwidth allocated to each data flow by making a request to the network provider, since the user does not have an interface for making such a change.

In earlier systems, network operators had sole responsibility for management of network equipment. However, this has resulted in high workloads for the network operators. Recently, systems have been devised in which a network operator can allow enterprises or service providers to own and manage network equipment. Against a background of increased resources and CPU (Central Processing Unit) power, together with reduced equipment costs, the ability to host services and/or customise management become highly important. Therefore, network operators may need to allow customers to use partitioned equipment. However, when network operators want to partition network equipment for leasing to users, such as service providers or enterprises, they need to continue managing the network equipment for security reasons and/or for billing purposes.

CNM (Customer Network Management) has provided a concept of network and resource partitioning with a customisable view of networks and network services. However, these technologies have mainly focused on fault detection or monitoring the status of networks.

Prior systems comprising multiple classifiers and schedulers are discussed in Requests For Comments (RFC) documents and Internet drafts by the Internet Engineering Task Force (IETF), for example RFC 3289, RFC 3290, "Differentiated Services Quality of Service Policy Information Base" (draft-ietf-diffserv-pib-09.txt), "Information Model for Describing Network Device QoS Datapath Mechanisms" (draft-ietf-policy-qos-device-info-model-08.txt) and "Policy QoS Information Model" (draft-ietf-policy-qos-info-model-04.txt). However, the relationships between an owner and the multiple classifiers and schedulers are not described. This implies that there is only one owner in control of these components. Furthermore, the management of the multiple classifiers is independent of the management of the multiple schedulers. Therefore, a conventional network node cannot provide each network node user with a classifier, multiple queue-buffers and a scheduler, together with interfaces for the user's control of these components.

The invention relates to a network node architecture in which administrators can manage partitions and provision data flows as needed by customers. The administrators can belong to network operators, service providers, enterprises or can be end users. More precisely, a network provider can provide a classifier, multiple queue-buffers and a scheduler to each user of a network node.

According to a first aspect of the invention, a network node comprises a first layer of processing components comprising a first classifier and a first scheduler, a second layer of processing components comprising at least one second classifier and at least one second scheduler and an access controller, wherein the access controller is arranged to allow configuration of processing components in the first layer by a first user and to allow configuration of processing components in the second layer by one or more second users.

The network node comprises multiple classifiers and schedulers arranged in at least two layers. The first layer comprises a classifier and a scheduler, both of which may be owned by a network provider. A user of the network node, for example an end-user or a service provider, may own a classifier and a scheduler in the second layer. Multiple queue-buffers that are owned by the user are connected between their classifier and their scheduler in the second layer.

The first layer classifier classifies data flows based on owner of the flows and directs the flows to the appropriate second layer classifier. The owner of the classifier, multiple queue-buffers and the scheduler in the second layer can control these components. The network provider manages the scheduler in the first layer to control the output from each scheduler in the second layer. In this manner, the node apparatus and interfaces allows node users to configure the node without intervention from the network node provider.

This aspect also provides a system comprising such a network node, together with interfaces for receiving requests from the first and second users.

According to a second aspect of the invention, a network node comprises an input interface, a routing component, a first layer of processing components comprising a first classifier and a first scheduler, a second layer of processing components comprising at least one second classifier and at least one second scheduler, and an access controller comprising a database of access rights attributes, wherein the input interface is configured to receive a request to access a processing component from a user interface, the routing component is configured to direct said request to the access controller and the access controller is arranged to determine whether to allow the access request on the basis of information extracted from the request and information stored in its database.

According to a third aspect of the invention, a method of configuring a network node, which comprises a first layer of processing components comprising a first classifier and a first scheduler, a second layer of processing components comprising at least one second classifier and at least one second scheduler and an access controller, comprises the steps of generating access control policy data by associating access right attributes for the processing components with a plurality of users, receiving a configuration request, which identifies a source of the request and one processing component to be configured, determining whether the source is permitted to configure the one processing component using said access control policy data and, in response to a positive determination, accepting said request.

Therefore, the task of configuring the network node can be divided among the plurality of users, potentially reducing the workload of a network node provider. This method is particularly suitable where node components are partitioned and/or leased to a number of users. Each user is assigned access rights to components of the node so that they are able to configure their own components without requiring specific approval or intervention from a network node provider and without compromising security.

According to a fourth aspect of the invention, a method of receiving and transmitting data in a network node, which comprises at least one first classifier and at least one first scheduler arranged in a first layer for control by a first user and at least one second classifier and at least one second scheduler arranged in a second layer for control by a second user, comprises the steps of receiving a data flow at a first classifier and forwarding the data flow to a second classifier, receiving the data flow at the second classifier and forwarding the data flow to a local marker, which assigns a DSCP value to data packets within the data flow and forwards the flow for reception by a second scheduler, regulating the data flow at a second scheduler, which is arranged to forward the received data flow for reception by the first scheduler, and regulating onward transmission of the data flow at the first scheduler.

Therefore, a user can assign a DSCP value to a data flow without specific approval or intervention from a network node provider. The DSCP may be a local value that is defined with respect to the components owned or leased by the user. The method may further comprise replacing such a local DCSP value of a data packet with a global DCSP value before onward transmission.

Embodiments of the invention will now be described by way of example with reference to the accompanying drawings, in which:
Figure 1 is a block diagram of a network node according to a first embodiment of the invention;
Figure 2 shows the contents of a database that is stored in an access control component in the node of Figure 1;
Figure 3 shows the contents of a database that is stored in a routing component in the node of Figure 1;
Figure 4 shows the contents of a database that is stored in a parent classifier in the node of Figure 1;
Figure 5 shows the contents of a database that is stored in a further parent classifier in the node of Figure 1;
Figure 6 shows the contents of a database that is stored in a classifier in the node of Figure 1;
Figure 7 shows the contents of a database that is stored in a scheduler in the node of Figure 1;
Figure 8 shows the contents of a database that is stored in a parent scheduler in the node of Figure 1;
Figure 9 shows example configuration data for a further classifier in the node of Figure 1;
Figure 10 is a block diagram of a network node according to a second embodiment of the invention;
Figure 11 shows the contents of a database that is stored in an access control component in the node of Figure 10;
Figure 12 shows the contents of a database that is used by both a classifier and a marker in the node of Figure 10;
Figure 13 is a block diagram of a network node according to a third embodiment of the invention;
Figure 14 shows the contents of a database that is stored in an access Control component in the node of Figure 13;
Figure 15 shows the contents of a database that is used by both a final classifier and a final marker in the node of Figure 13;
Figure 16 is a block diagram of part of a network node according to a fourth embodiment of the invention;
Figure 17 shows the contents of a database that is stored in an access control component in the node of Figure 16;
Figure 18 shows the contents of a database that is stored in a parent classifier in the node of Figure 16;
Figure 19 shows the contents of a database that is stored in a child classifier in the node of Figure 16;
Figure 20 shows the contents of a database that is stored in a classifier in the node of Figure 16;
Figure 21 shows the contents of a database that is stored in a scheduler in the node of Figure 16;
Figure 22 shows the contents of a database that is stored in a child scheduler in the node of Figure 16;
Figure 23 shows the contents of a database that is stored in a parent scheduler in the node of Figure 16;
Figure 24 shows the software structure of an access controller in the node of Figure 1; and
Figure 25 shows the contents of a database that is stored in the access controller of Figure 24.

### First embodiment

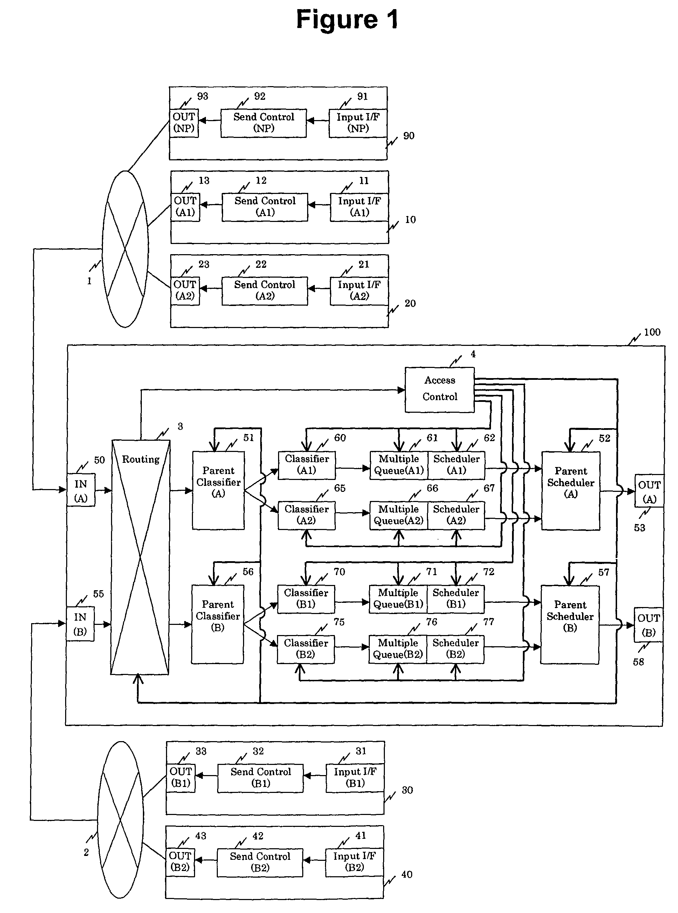

A system that provides interfaces for node users to configure a node without intervention from a network node provider is shown in Figure 1. The system comprises one or more terminals 10, 20, 30, 40, a network provider terminal 90 and a network node 100. As shown in Figure 1, the terminals and the network node are connected through networks 1, 2, for example IP (Internet Protocol) networks. Specifically, the terminals 10 and 20 are connected to the node 100 through network 1, while the terminal 20 and 40 are connected to the node 100 by way of network 2.

The network provider terminal 90 comprises an input interface(NP) 91, a send control(NP) 92 and an output port(NP) 93. Hereafter, the abbreviation NP is used to indicate the network provider.

A first service provider terminal 10 comprises an input interface(A1) 11, a send control(A1) 12 and an output port(A1) 13. A second service provider terminal 20 comprises an input interface(A2) 21, a send control(A2) 22 and an output port(A2) 23. A third service provider terminal 30 comprises an input interface(B1) 31, a send control(B1) 32 and an output port(B1) 33. A fourth service provider terminal 40 comprises an input interface(B2) 41, a send control(B2) 42 and an output port(B2) 43. Hereafter, the first, second, third and fourth service providers are referred to as SP(A1), SP(A2), SP(B1) and SP(B2) respectively.

The network node 100 comprises input ports 50, 55, output ports 53, 58, an access control component 4, a routing component 3, parent classifiers 51, 56, parent schedulers 52, 57, classifiers 60, 65, 70, 75, multiple queue buffers 61, 66, 71, 76 and schedulers 62, 67, 72, 77. The classifiers and schedulers are arranged in two layers. A first layer comprises the parent classifiers 51, 56 and parent schedulers 52, 57 while a second layer comprises classifiers 60, 65, 70, 75 and schedulers 62, 67, 72, 77, which are located either between parent classifier(A) 51 and parent scheduler(A) 52 or between parent classifier(B) 56 and parent scheduler(B) 57.

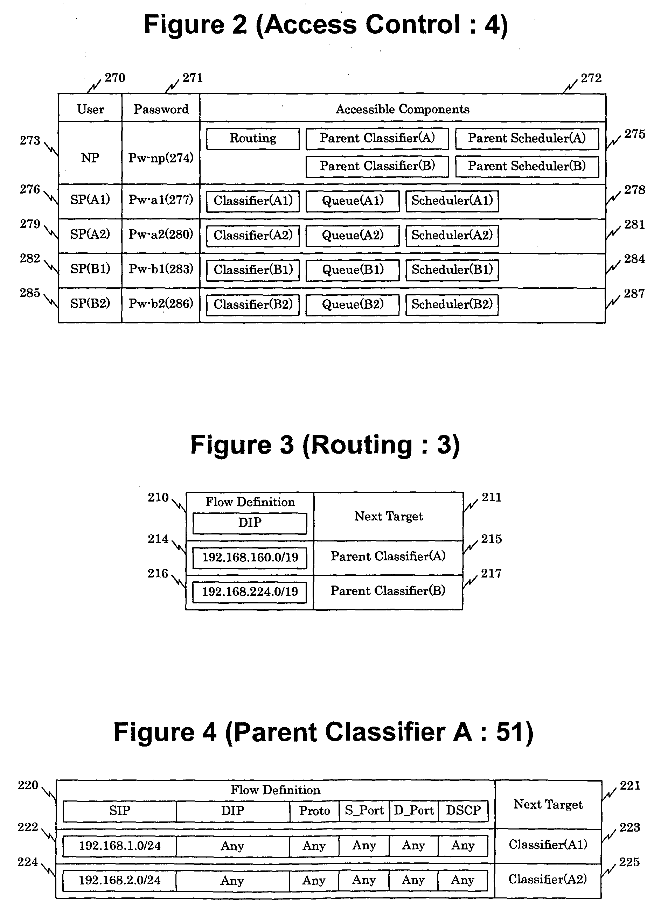

Figure 2 shows the contents of a database that is stored in the access control component 4. The contents comprise user data 270, password data 271 and a list accessible components 272.

Figure 3 shows the contents of a database stored in the routing component 3. It comprises flow definition data 210, such as a destination IP address (DIP), and next target data 211.

Figure 4 shows the contents of a database that is stored in the parent classifier(A) 51. It comprises flow definition data 220, which includes a source IP address (SIP), a destination IP address (DIP), a protocol number (Proto), a source port number (S_Port), a destination port number (D_Port) and a Differentiated Services Code Point (DSCP), together with next target data 221.

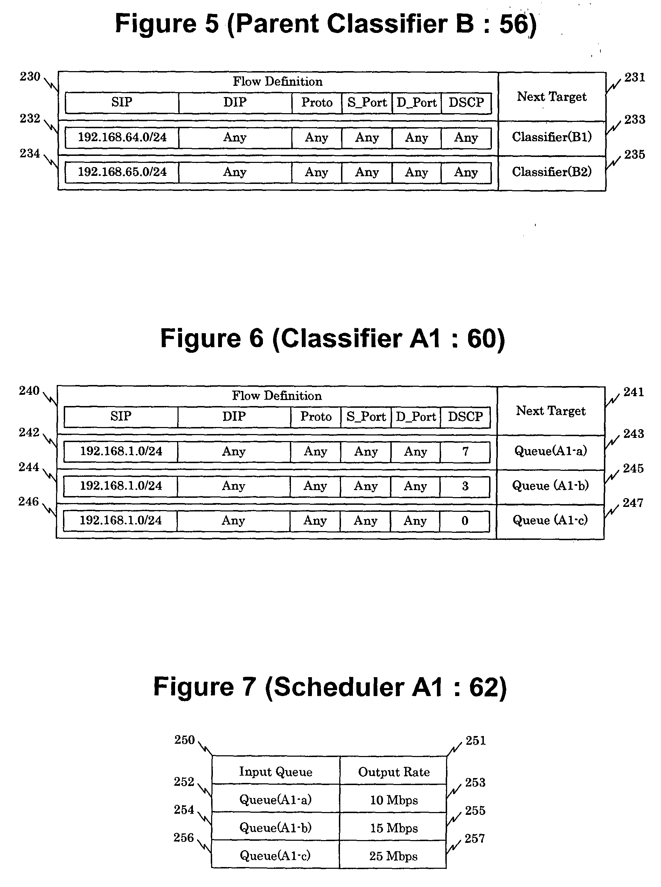

Figure 5 shows the contents of a database that is stored in the parent classifier(B) 56. It comprises flow definition data 230 and next target data 231.

Figure 6 shows the contents of a database that is stored in the classifier(A1) 60. It comprises flow definition 240 and next target data 241.

Figure 7 shows the contents of a database that is stored in the scheduler(A1) 62. It comprises input queue data 250 and corresponding output rate data 251.

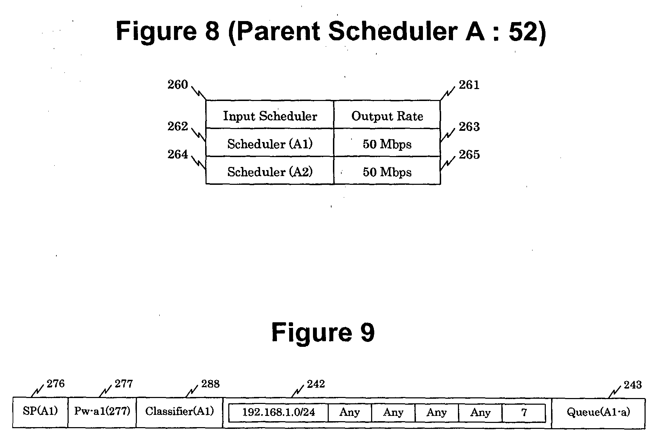

Figure 8 shows the contents of a database that is stored in the parent scheduler(A) 52. It comprises input scheduler data 260 and corresponding output rate data 261.

Example configuration data for the classifier(A1) in shown in Figure 9. It comprises service provider name data 276, password data 277, target component data 288, flow definition data 242 and target queue data 243.

The operation of the system of Figure 1 will now be described in detail, with reference to Figures 2 to 9. A description of the operation of individual processing components, such as the classifier and the scheduler, can be found in prior art document RFC 3290.

Firstly, NP sets the access control data stored in the access control component 4 and shown in Figure 2, using terminal 90 as follows. NP generates the access control data at the input interface(NP) 91, which is sent by the send control(NP) 92 through the output port(NP) 93 and network 1 to the access control component 4. According to the access control data, as shown by data 273 to 275, the password for NP is Pw-np and NP is permitted to configure the routing component, parent classifiers(A) and (B) and parent schedulers (A) and (B). As shown by data 276 to 278, the password for SP(A1) is Pw-a1 and SP(A1) can configure only classifier(A1), queue(A1) and scheduler(A1). As shown by data 279 to 281, the password for SP(A2) is Pw-a2 and SP(A2) can only configure classifier(A2), queue(A2) and scheduler(A2). As shown by data 282 to 284, the password for SP(B1) is Pw-b1 and SP(B1) can only configure classifier(B1), queue(B1) and scheduler(B1). As shown by data 285 to 287, the password for SP(B2) is Pw-b2 and SP(B2) can only configure classifier(B2), queue(B2) and scheduler(B2).

NP also sets the routing data, shown in Figure 3, which is stored in the routing component 3, via the terminal 90 and the network 1 as follows. NP accesses the access control component 4 and, since NP is permitted to configure the routing component 3, as indicated by the list 275 in Figure 2, a configuration request is dispatched to the routing component 3. According to the routing data, as shown by data 214 to 215, if a destination IP address of a received data packet falls within the flow definition of 192.168.160.0/19, the packet is forwarded to the parent classifier(A) 51. The notation 192.168.160.0/19 indicates IP addresses in a range from 192.168.160.0 to 192.168.191.255. In accordance with data 216 to 217, if the destination IP address of the received data packet is within the flow definition of 192.168.224.0/19, the data packet is forwarded to parent classifier(B) 56.

Use of the network node 100 by SP(A1), SP(A2), SP(B1) and SP(B2) is governed by agreements between the service providers with NP. Each agreement specifies an allowed output network bandwidth for data output by a service provider and a definition which is used to determine whether a particular flow belongs to that service provider.

Agreed flow definitions are stored in the parent classifier(A) 51 and the parent classifier(B) 56 by NP via the terminal 90 and the network 1, and are shown in Figures 4 and 5. According to data 222 and 223 in Figure 4, if a source IP address of a received packet belongs to the set of addresses 192.168.1.0/24, the packet flow is identified as belonging to SP(A1) and the packet is dispatched from the parent classifier(A) 51 to the classifier(A1) 60. According to data 224 and 225, if an source IP address of a received packet belongs to the set 192.168.2.0/24, the packet flow is owned by SP(A2) and the packet is dispatched from the parent classifier(A) 51 to the classifier(A2) 65. As shown by data 232 and 233 in Figure 5, if an source IP address of a received packet belongs to the set 192.168.64.0/24, the packet flow is owned by SP(B1) and the packet is dispatched from the parent classifier(B) 56 to the classifier(B1) 70. Similarly, from data 234 and 235, if an source IP address of a received packet belongs to the set 192.168.65.0/24, the packet flow is owned by SP(B2) and the packet is dispatched from the parent classifier(B) 56 to the classifier(B2) 75.

The agreed output network bandwidths are stored in the parent scheduler(A) 52, as shown in Figure 8, having been set by NP through the terminal 90 and network 1. As shown by data 262 and 263, data is output from the scheduler(A1) to the outside network 53 at a rate of 50 Mbps (mega-bits per second). In accordance with data 264 and 265, data is also output from the scheduler(A2) to the outside network 53 at 50 Mbps. The data which is shown in Figure 8 is agreed between NP and the respective service providers SP(A1), SP(A2). Similar agreements are made between SP(B1) and NP and between SP(B2) and NP.

Service providers can configure their own components as follows. SP(A1) can access to the node 100 through the terminal 10 and the network 1. SP(A1) generates configuration data for the classifier(A1) 60, the multiple queues(A1) 61 and the scheduler(A1) 62 at the input interface(A1) 11, which is sent to the access control component 4 by the send control(A1) 12 through the output port(A1) 13. Example configuration data stored in the classifier(A1) 60 is shown in Figure 6. More specifically, as shown by data 242, 243, if a source IP address of a received packet is within the flow definition 192.168.1.0/24 and its DSCP (Differentiated Services Code Point) number is seven, the packet is sent to queue(A1-a). As shown by data 244, 245, if the source IP address belongs to the set 192.168.1.0/24 and its DSCP number is three, the packet is sent to queue(A1-b). In accordance with data 246 and 247, if the source IP address belongs to the set 192.168.1.0/24 and its DSCP number is zero, the packet is sent to queue(A1-c).

Referring to Figure 9, the configuration data 242, 243, produced by SP(A1) is sent to the access control component 4, together with user name data 276, password data 277 and the target component name data 288. In this case, the target component name data 288 identifies the classifier(A1). When the access control component 4 receives the request to configure the classifier(A1), i.e. data 276, 277, 288, 242 and 243, it checks the requester's name data 276 and password data 277. If the requester's name and password are accepted, it checks the requester's right to access the requested target component. If the requester has the right to configure the target component, configuration data 242 and 243 are transmitted to the requested target component.

The multiple queue(A1) 61 and scheduler(A1) 62 may also be configured in this manner. Specifically, SP(A1) can configure the sizes of the multiple queue buffers. In case of the scheduler 62, an output rate for each queue is configured. As shown from the data 252 to 257 in Figure 7, data is outputted from queue(A1-a) at 10 Mbps, from queue(A1-b) at15 Mbps and from the queue(A1-c) at 25 Mbps.

Components 65-67, 70-72 and 75-77 can also be configured by their respective owners SP(A2), SP((B1) and SP(B2) using this procedure.

When a data packet enters the input port (A) or (B), its destination IP address is analysed in the routing component 3. If the destination IP address is included in flow definition 214, shown in Figure 3, the packet is forwarded to the parent classifier(A) 51. If it is included in flow definition 216, the packet is transmitted to parent classifier(B) 56.

The parent classifier analyses the header of the received packet. Taking parent classifier(A) 51 as an example, if the source IP address of a received packet is included in flow definition 222, shown in Figure 4, the data packet is transmitted to the classifier(A1) 60. If it is included in the flow definition data 224, the data packet is transmitted to classifier(A2) 65.

When the classifier receives the packet data, it analyses the header. The packet is dispatched to a selected queue in accordance with the header data. Using classifier(A1) 60 as an example, if the received packet belongs to the flow definition 242, it is transmitted to the queue(A1-a). If the header data indicates that the packet belongs to flow definition 244 or 246, the packet is transmitted to queue(A1-b) or queue(A1-c) accordingly.

Packet data in the multiple queues(A1) is transmitted by the scheduler(A1) 62 in accordance with the data stored in its database, shown in Figure 7. Packet data in queue(A1-a) is transmitted to the parent scheduler(A) 52 at 10 Mbps. Packet data in queue(A1-b) and queue(A1-c) are transmitted to the parent scheduler(A) 52 at 15 Mbps and 25Mbps respectively.

Classifier(A2) 65, multiple queue(A2) 66 and scheduler(A2) 67 follow the same procedures as classifier(A1) 60, multiple queue(A1) 61 and scheduler(A1) 62 respectively, in accordance with the configuration data stored in their databases.

Packet data from scheduler(A1) and scheduler(A2) is transmitted to the outside network through the output port(A) 53 in accordance with data held in the database of the parent scheduler(A) 52, which is shown in Figure 8. Packet data is transmitted to the outside network from scheduler(A1) 62 at 50 Mbps and from scheduler(A2) 67 at 50 Mbps by the parent scheduler(A).

The operation of the parent classifier(B) follows the same procedure as described in relation to the parent classifier (A).

Classifier(B1) 70, multiple queue(B1) 71 and scheduler(B1) 72 operate in the same manner as classifier(A1) 60, multiple queue(A1) 61 and scheduler(A1) 62 respectively, as do classifier(B2) 75, multiple queue(B2) 76, scheduler(B2) 77. The procedures followed by the parent scheduler(B) 57 for transmitting data via the output port(B) 58 are the same as those performed by the parent scheduler(A) 52 with respect to output port(A) 53.

In this embodiment, the node 100 has two sets of input ports and output ports. However it is possible to extend this arrangement to a node that has more than two input ports and two output ports, such as three input ports and three output ports etc. In addition, while the multiple queue component has three queue buffers, other numbers of multiple queue buffers may be provided. For example, a multiple queue component may have 8 queue buffers.

In this arrangement, only the packet flow owned by a specific service provider is dispatched to a classifier that is owned by the service provider. In addition, NP defines an output rate from the service provider to outside network. This output rate is fixed, regardless of configuration of the components located between the parent classifier and the parent scheduler. For example, the packet flow owned by SP(A1) can only be transmitted to the classifier(A1) 60 from the parent classifier(A) 51. The output rate from the scheduler(A1) 62 to the outside network 53 is controlled by the parent scheduler(A) 52. Therefore, the flow data owned by SP(A1) is not affected by the actions of other service providers such as SP(A2). The output rate is independent of the configuration of the classifier(A1) 60, multiple queue(A1) 61 and scheduler(A1) 62, since the rate is controlled only by the parent scheduler(A) 52.

The configuration of the classifiers and schedulers in the second layer is delegated to the respective service providers. Therefore, a service provider may configure components between parent classifier and a parent scheduler without requiring specific approval or intervention from NP.

### Second embodiment

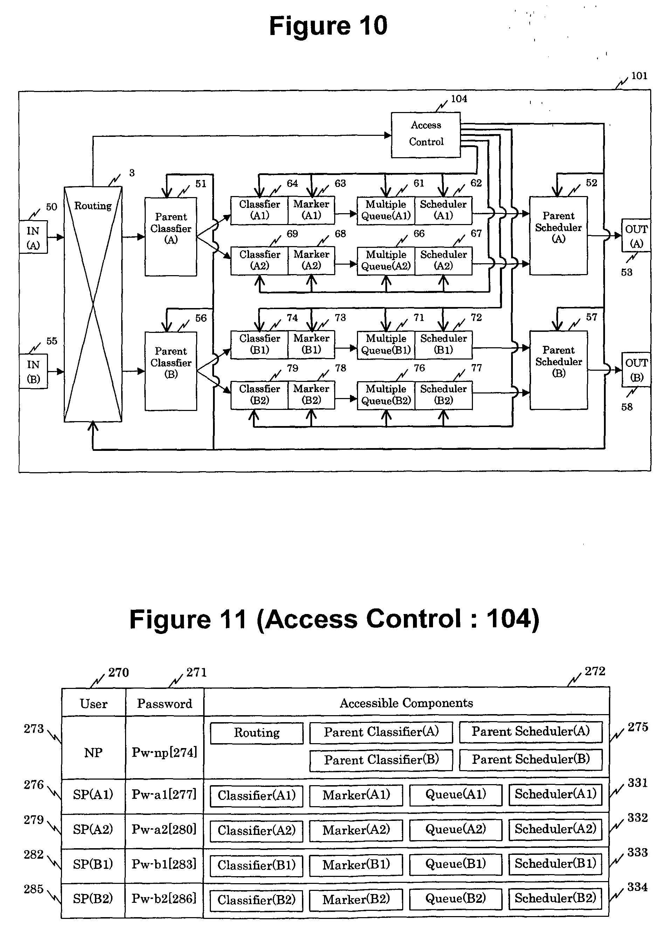

A network node according to a second embodiment of the invention is shown in Figure 10. The differences between the node 101 and node 100 of Figure 1 relate to the inclusion of marker components(A1) 63, (A2) 68, (B1) 70, (B2) 75 and to the processing performed by classifier components(A1) 64,(A2) 69, (B1) 74, (B2) 79 and access control component 104. The operation of the other processing components in node 101 is the same as that described in relation to the corresponding components of node 100.

Figure 11 shows the contents of a database that is stored in the access control component 104, comprising user data 270, password data 271 and accessible components list data 272. The accessible components list data 272 includes entries for the marker components, as shown by data 331-334. However, the remaining data in the database of Figure 11 is the same as that of Figure 2.

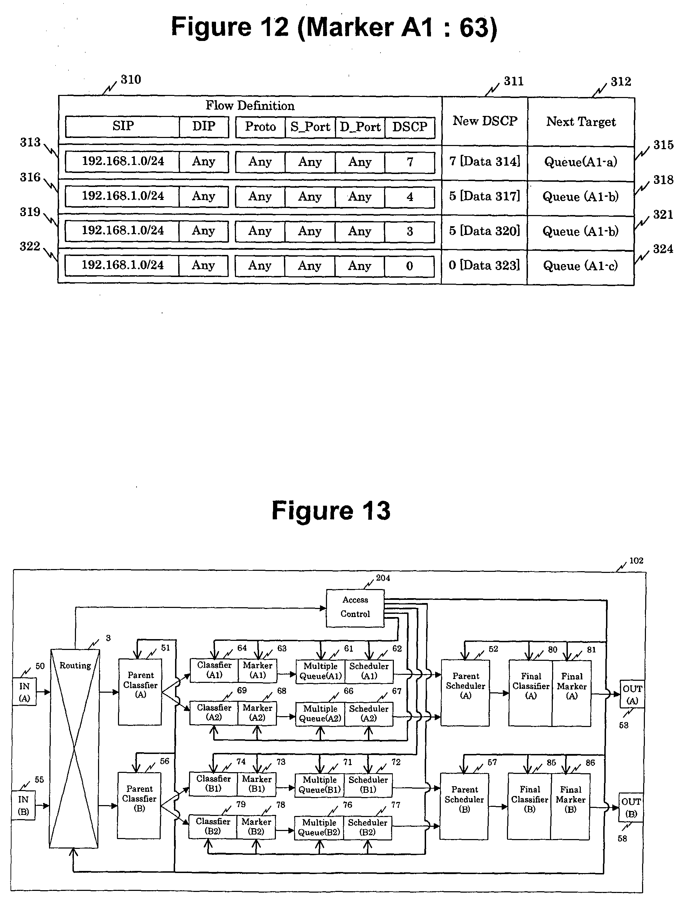

Figure 12 shows the contents of a database that is used by both the classifier(A1) 64 and the marker(A1) 63. It comprises flow definition data 310, DSCP data 311 and next target data 312.

The operation of the node 101 of Figure 10, will now be explained in detail, where this differs from the operation of the node 100 of Figure 1.

Firstly, NP sets the access control data, shown in Figure 11, at the access control 104 through the terminal 90. As shown by data 276, 331, SP(A1) is permitted to configure the marker(A1), in addition to the classifier(A1), the queue(A1) and the scheduler(A1). Similarly, as shown by data 279, 332, SP(A2) can configure marker(A2), classifier(A2), queue(A2) and scheduler(A2). Data 282, 333 show that SP(B1) can configure marker(B1), classifier(B1), queue(B1) and scheduler(B1), while data 285, 334 show that SP(B2) can configure marker(B2), classifier(B2), queue(B2) and scheduler(B2). Therefore, SP(A1), SP(A2), SP(B1) and SP(B2) can configure their respective classifier components (A1) 64, (A2) 69, (B1) 74, (B2) 79 and respective marker components (A1) 63, (A2) 68, (B1) 73, (B2) 78.

SP(A1) creates configuration data for the classifier(A1) 64 and the marker(A1) 63, which is sent to these components via the access control component 104. An example of this configuration data is shown in Figure 12. As shown by data 313-315, if a source IP address of a received packet belongs to the set 192.168.1.0/24 and its DSCP number is seven, the DSCP number is not altered by the marker(A1) 63 and the packet is sent to queue(A1-a) by the classifier(A1) 64. According to the data 316-318, if the source IP address belongs to the set 192.168.1.0/24 and the DSCP number is four, the DSCP number is changed to the number five by the marker(A1) 63 and the packet is sent to queue(A1-b) by the classifier(A1) 64. As shown by data 319-321, if the source IP address belongs to the set 192.168.1.0/24 and the DSCP number is three, the DSCP number is changed to the number five by the marker(A1) 63 and the packet is sent to queue(A1-b) by the classifier(A1) 64. As shown by the data 322-324, if the source IP address is belongs to the set 192.168.1.0/24 and the DSCP number is zero, the DSCP number is not altered by the marker(A1) 63 and the packet is sent to queue(A1-c) by the classifier(A1) 64.

Similar configuration data is created by SP(A2), SP(B1) and SP(B2) and stored in classifiers 69, 74, 79 and markers 68, 73, 78 respectively.

In this manner, a service provider to control the quality of transmission of a particular data flow by assigning it a DSCP number, without having to request approval or intervention from the network provider.

### Third embodiment

A network node 102 according to a third embodiment of the invention is shown in Figure 13. The network node 102 differs from the network node 101 of Figure 10 in the inclusion of final classifier components(A) 80,(B) 85, final maker components(A) 81, (B) 86 and in the processing performed by access control component 204. The remaining components of the node 102 are the same as those of node 101.

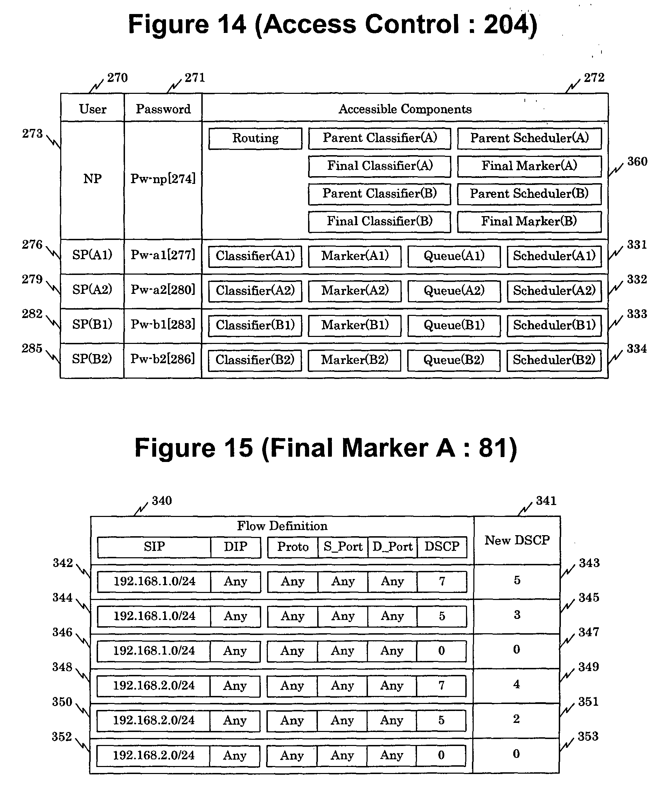

Figure 14 shows the contents of a database that is stored in the access control component 204. It comprises user data 270, password data 271 and accessible components list data 272.

Figure 15 shows the contents of a database that is used by the final classifier(A) 80 and the final marker(A) 81. It comprises flow definition data 340 and DSCP data 341.

The differences between the operation of the node 102 and that of the node 101 of Figure 10 will now be described.

Firstly, NP sends the access control data, shown in Figure 14, for storage in the access control component 204 from the terminal 90. The access control data differs from the database of Figure 11 by way of the list 360 of components that may be accessed by NP, which includes final classifier(A) 80, final marker(A) 81, final classifier(B) 85 and final marker(B) 86, in addition to the parent classifiers 51, 56, the parent schedulers 52, 57 and the routing component 3. The remaining data in Figure 14 is the same as that in the database of Figure 11.

Since the DSCP number assigned to a data flow by the marker components 63, 68, 73, 78 is not a global number but a local number defined by each service provider, the local DSCP number must be changed to a corresponding global DSCP number by the final markers 81, 86 before the data flow is transmitted to the outside network. The NP can configure the final classifiers 80, 85 and the final markers 81, 86 as follows.

NP creates configuration data for the final classifier(A) 80 and the final marker(A) 81 and sends it to the access control component 204. Example configuration data is shown in Figure 15. According to data 342, 343, if a source IP address of a received packet is within the set 192.168.1.0/24 and its DSCP number is seven, the DSCP number is changed to five by the final marker(A) 81. According to data 344, 345, if the source IP address belongs to the set 192.168.1.0/24 and the DSCP number is five, the DSCP number is changed to three by the final marker(A) 81. As shown by data 346, 347, if the source IP address belongs to the set 192.168.1.0/24 and the DSCP number is zero, DSCP number is not altered by the final marker(A) 81. As shown by data 348, 349, if the source IP address belongs to the set 192.168.2.0/24 and the DSCP number is seven, the DSCP number is changed to four by the final marker(A) 81. As shown by data 350, 351, if the source IP address belongs to the set 192.168.2.0/24 and the DSCP number is five, the DSCP number is set to two by the final marker(A) 81. As shown from the 352, 353, if the source IP address belongs to the set 192.168.2.0/24 and the DSCP number is zero, the DSCP number is not altered by the final marker(A) 81.

The packet is then sent to the output port(A) 53 by the final classifier(A) 80.

Similar configuration data is sent from the NP for use by the final classifier(B) 85 and the final marker(B) 86, which send data to the outside network via output port(B) 58.

Therefore, in this embodiment, the network provider(NP) can change a local DSCP number into a global DSCP number. This may be done in accordance with an agreement between NP and a service provider so that control over the quality of transmission of data is shared between them.

### Fourth embodiment

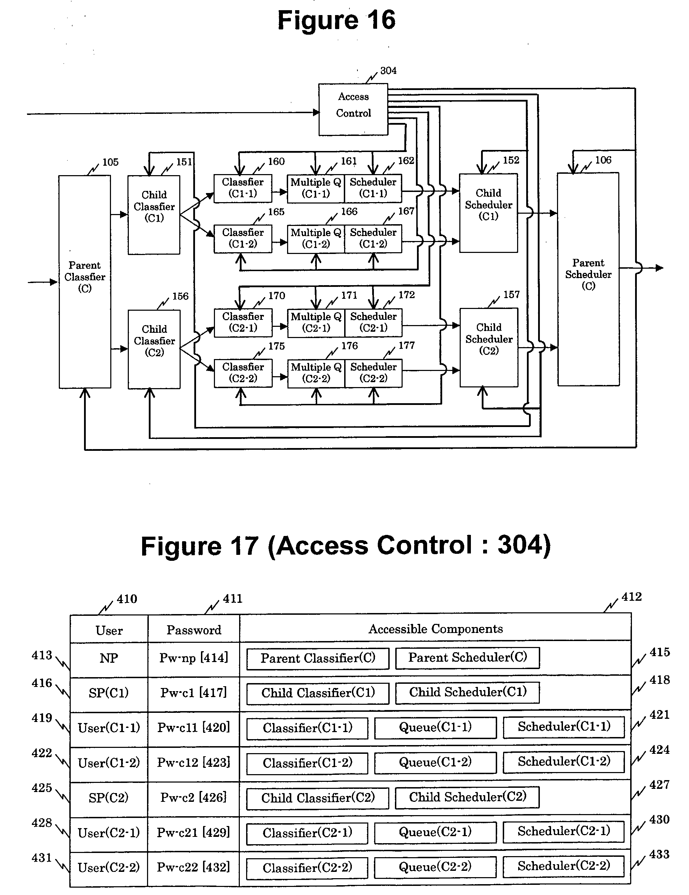

A node according to a fourth embodiment of the invention is shown in Figure 16. The node 100 of Figure 1 comprised two layers, a first layer comprising the parent classifiers and parent schedulers and a second layer comprising at least one classifier and at least one scheduler located between one of the parent classifiers (A) 51, (B) 56 and a respective parent scheduler(A) 52 or (B) 57. By way of contrast, the node of Figure 16 comprises classifiers and schedulers arranged in a three layer hierarchy. The first layer comprises a parent classifier(C) 105 and a parent scheduler(C) 106. The second layer comprises child classifiers (C1) 151, (C2) 156 and child schedulers (C1) 152, (C2) 157 located between the parent classifier(C) 105 and parent scheduler(C) 106. The third layer comprises multiple classifiers 160, 165, 170, 175, queue buffers 161, 166, 171, 176 and schedulers 162, 167, 172, 177 located between one of the child classifiers (C1) 151, (C2), 156 and a respective child scheduler (C1) 152, (C2) 157.

Figure 17 shows the contents of a database that is stored in an access control component 304 of the node. It comprises user data 410, password data 411 and accessible components list data 412.

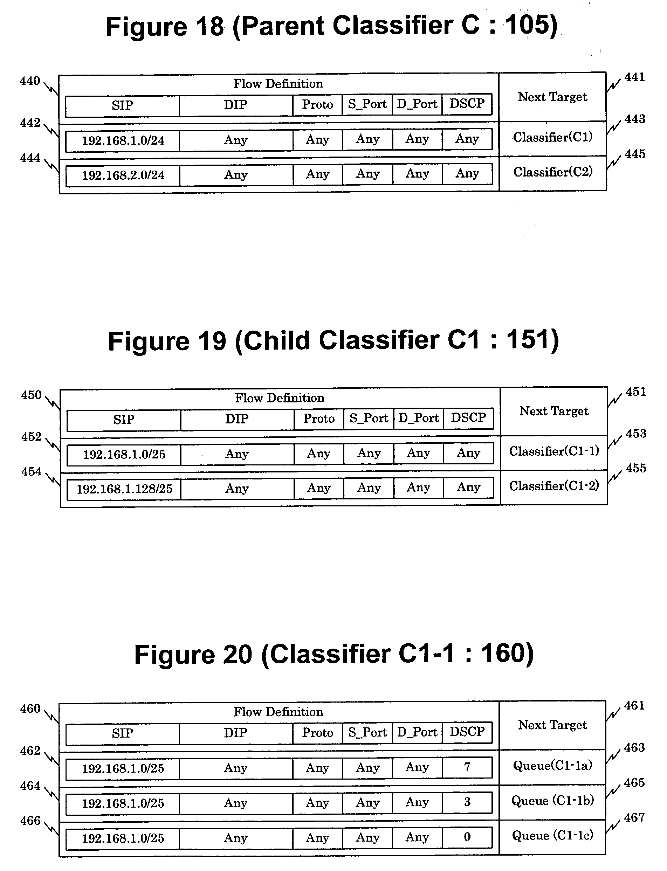

Figure 18 shows the contents of a database that is stored in the parent classifier(C) 105. It comprises flow definition data 440 and next target data 441.

Figure 19 shows the contents of a database that is stored in the child classifier(C1) 151. It comprises flow definition data 450 and next target data 451.

Figure 20 shows the contents of a database that is stored in a third layer classifier(C1-1) 160 in Figure 16, comprising flow definition data 460 and next target data 461.

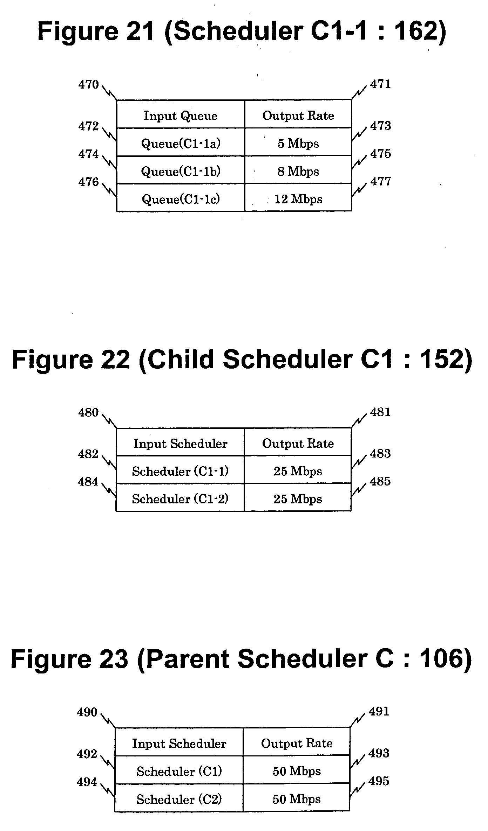

Figure 21 shows the contents of a database that is stored in a third layer scheduler(C1-1) 162 in Figure 16. It comprises input queue data 470 and output rate data 471.

Figure 22 shows the contents of a database that is stored in the child scheduler(C1) 152. It comprises input scheduler data 480 and output rate data 481.

Figure 23 shows the contents of a database that is stored in the parent scheduler(C) 106 in Figure 16. It comprises input scheduler data 490 and output rate data 491.

The operation of the node of Figure 16 will now be described with reference to Figures 17 to 23. Firstly, NP sets the access control data, which is stored in the access control component 304 and shown in Figure 17, via terminal 90. As shown by data 413 to 415, the password for NP is Pw-np and NP is able to configure the parent classifiers(C) and the parent schedulers (C). According to data 416 to 418, the password for SP(C1) is Pw-c1 and SP(C1) can configure the child classifiers(C1) and the child schedulers(C1). As shown by data 419 to 421, the password for User(C1-1) is Pw-c11 and User(C1-1) can only configure classifier(C1-1), queue(C1-1) and scheduler(C1-1). As shown by data 422 to 424, the password for User(C1-2) is Pw-c12 and User(C1-2) can only configure classifier(C1-2), queue(C1-2) and scheduler(C1-2). As shown by data 425 to 427, the password for SP(C2) is Pw-c2 and it can configure child classifier(C2) and child scheduler(C2). As shown by data 428 to 430, the password for User(C2-1) is Pw-c21 and User(C2-1) can only configure classifier(C2-1), queue(C2-1) and scheduler(C2-1). As shown by data 431 to 433, the password for User(C2-2) is Pw-c22 and User(C2-2) can only configure classifier(C2-2), queue(C2-2) and scheduler(C2-2). Thus, NP, SP(C1), User(C1-1), User(C1-2), SP(C2), User(C2-1) and User(C2-2) can each configure their respective components without intervention from other node users.

The use of network node components by SP(C1) and SP(C2) is governed by agreements between NP and SP(C1) and between NP and SP(C2). These agreements include an output network bandwidth for data output by SP(C1) and SP(C2) and one or more definitions for identifying SP(C1) or SP(C2) as the owner of a data flow. The agreements regarding ownership of data flows are reflected by the data stored in the parent classifier(C), as shown in Figure 18. According to data 442, 443, if a source IP address(SIP) of a received packet is within a range of addresses 192.168.1.0/24, the packet flow is owned by SP(C1) and the packet is dispatched from the parent classifier(C) 105 to the child classifier(C1) 151. As shown by data 444, 445, if the source IP address(SIP) belongs to a range 192.168.2.0/24, the packet flow is owned by SP(C2) and the packet is dispatched from the parent classifier(C) 105 to the child classifier(C2) 156.

The agreements between SP(C1) and NP and between SP(C2) and NP, with regard to output network bandwidth, determine the data that is stored in the parent scheduler(C) 106 by the NP, shown in Figure 23. According to data 492, 493, data from the child scheduler(C1) 152 is output to an outside network at 50 Mbps. As shown by data 494, 495, data from the child scheduler(C2) 157 is also output to an outside network at 50 Mbps.

Agreements between SP(C1) and User(C1-1) and between SP(C1) and User(C1-2) govern the use of components such as the classifier 160, 165, the multiple queue 161, 166 and the scheduler 162, 167 depicted in Figure 16. The agreements specify an output bandwidth and one or more definitions used to identify data flows belonging to the user. The agreements regarding ownership of data flows are reflected by the data stored in the child classifier(C1), shown in Figure 19. As shown by data 452, 453, if a source IP address of a received packet is within a set of addresses 192.168.1.0/25, the packet flow is owned by User(C1-1) and the packet is dispatched from the child classifier(C1) 151 to the classifier(C1-1) 160. According to data 454, 455, if the source IP address is within the set 192.168.1.128/25, the packet flow is owned by User(C1-2) and the packet is dispatched from the child classifier(C1) 151 to the classifier(C1-2) 165.

The agreements regarding output bandwidth between User(C1-1) and SP(C1), and between User(C1-2) and SP(C1) are implemented using the data stored in the child scheduler(C1) 152 by the SP(C1), shown in Figure 22. As shown by data 482, 483, data is outputted from the scheduler(C1-1) 162 to the child scheduler(C1) 152 at 25 Mbps. In addition, according to data 484, 485, data is outputted by the scheduler(C1-2) 167 to the child scheduler(C1) 152 at 25 Mbps.

The use of components such as the classifier 170, 175, the multiple queue 171, 176 and the scheduler 172, 177 is governed by agreements made by User(C2-1) and User(C2-2) with SP(C2) in a similar manner. The agreements include an output bandwidth and definitions used to determine which user owns which data flows. The child classifier(C2) 156 and child scheduler(C2) 157 are configured using the procedure described above in relation to the child classifier(C1) 151 and child scheduler(C1) 152.

The users can configure their components without intervention from the service provider or NP. User(C1-1) generates configuration data for classifier(C1-1) 160, multiple queues(C1-1) 161 and scheduler(C1-1) 162. The configuration data for the classifier(C1-1) 160, which is shown in Figure 20, is stored in the classifier(C1-1) 160. In accordance with data 462, 463, if a source IP address of a received packet is within the set of addresses 192.168.1.0/25 and its DSCP number is seven, the packet is sent to queue(C1-1a). According to data 464, 465, if the source IP address belongs to the set 192.168.1.0/25 and the DSCP number is three, the packet is sent to queue(C1-1b). As shown by the data 466, 467, if the source IP address belongs to the set 192.168.1.0/25 and the DSCP number is zero, the packet is sent to queue(C1-1c).

Similar configuration data is produced and stored in classifier(C1-2) 165, classifier(C2-1) 170 and classifier(C2-2) 175 by User(C1-2), User(C2-1) and User(C2-2) respectively.

The multiple queue component(C1-1) 161 is also configured by User(C1-1). Specifically, User(C1-1) can configure the sizes of the multiple queue buffers. In this particular embodiment, three queue buffers are provided by the multiple queue component(C1-1), as shown by data 463, 465 and 467 in Figure 20, however other numbers or configurations of queue buffers may be used. The other multiple queues (C1-2) 166, (C2-1) 171 and (C2-2) 176 are configured by User(C1-2), User(C2-1) and User(C2-2) respectively.

User(C1-1) can also set an output rate for each queue by configuring the scheduler. A database stored in the scheduler(C1-1) 162 is shown in Figure 21. As shown by data 472 to 477, data is outputted to child scheduler(C1) 152 from queue(C1-1a) at a rate of 5 Mbps, from queue(C1-1b) at 8 Mbps and from queue(C1-1c) at 12 Mbps. The other schedulers (C1-2) 167, (C2-1) 172 and (C2-2) 177 are configured by User(C1-2), User(C2-1) and User(C2-2) respectively.

When the parent classifier(C) 105 receives a data packet, it analyses the header data. If a source IP address is included in the set of addresses given in flow definition data 442, shown in Figure 18, the data packet is transmitted to child classifier(C1) 151. If the source IP address belongs to the set of addresses given flow definition data 444, the data packet is transmitted to child classifier(C2) 156.

When the child classifier(C1) 151 receives the data packet, it analyses the header data. If a source IP address of the packet is included in the set of addresses given in flow definition data 452, shown in Figure 19, the data packet is transmitted to classifier(C1-1) 160. If the source IP address is included in the set of addresses in the flow definition data 454, the data packet is transmitted to the classifier(C1-2) 165.

When the classifier(C1-1) 160 receives the data packet, it analyses the header data. The packet is then dispatched to one of queues based on the header data information. If the received data packet meets flow definition 462, it is transmitted to queue(C1-1a). Where the data packet meets flow definition 464, it is transmitted to queue(C1-1b). If the data packet meets flow definition 466, it is transmitted to queue(C1-1c).

Packet data in the multiple queue(C1-1) 161 is transmitted by the scheduler(C1-1) 162 based on data stored in its database, which is shown in Figure 21. Packet data is transmitted to the child scheduler(C1) 152 from queue(C1-1a) at 5 Mbps, from queue(C1-1b) at 8 Mbps and from queue(C1-1c) at 12 Mbps.

Similar processing is performed by classifier(C1-2) 165, multiple queue(C1-2) 166 and scheduler(C1-2) 167, in accordance with their respective configuration data. The packet data from the scheduler(C1-1) 162 and the scheduler(C1-2) 167 are transmitted to the child scheduler(C1) 152 in accordance with the database stored in the child scheduler(C1) 152, which is shown in Figure 22. Packet data is transmitted to the child scheduler(C1) 152 from scheduler(C1-1) 162 at 25 Mbps and from scheduler (C1-2) 167 at 25 Mbps.

Subject to differences in configuration data, the procedures performed by child classifier(C2) 156 are the same as those performed by child classifier(C1) 151. The procedures performed by classifier(C2-1) 170, (C2-2) 175 are the same as those performed by classifier(C1-1) 160. The processing performed by multiple queues (C2-1) 171, (C2-2) 176 is the same as those performed by multiple queue(C1-1) 161. The processing carried out by scheduler(C2-1) 172 and scheduler(C2-2) 177 is the same as that performed by scheduler(C1-1) 162. The processing carried out by child scheduler(C2) 157 is the same as that performed by child scheduler(C1) 152.

Packet data from the child scheduler(C1) 152 and the child scheduler(C2) 157 is transmitted to the parent scheduler(C) 106 in accordance with rates 493, 495 specified in the database stored in the parent scheduler(C), which is shown in Figure 23. Packet data is transmitted to the outside network through the parent scheduler(C) from child scheduler(C1) 152 at 50 Mbps and from child scheduler(C2) 157 at 50 Mbps.

In this embodiment, only the packet flow owned by a specific service provider is dispatched to a classifier that is owned by that service provider. NP defines an output rate from each child scheduler to outside network. Therefore, the output rate is fixed, regardless of the configuration of the components located between the parent classifier(C) and the parent scheduler(C). In addition, only the packet flow owned by a specific user is dispatched to a classifier that is owned by the user. The service provider defines an output rate for each user. Therefore, the output rate from each scheduler to a child scheduler is fixed, regardless of the configuration of components located between the child classifier and the child scheduler.

For example, a packet flow owned by User(C1-1) can only be transmitted to the classifier(C1-1) 160 from the child classifier(C1) 151. The output rate from the scheduler(C1-1) 162 to the child scheduler(C1) 152 is only controlled by the parameters stored in the database of the scheduler(C1-1) 162. Therefore, the data flow owned by User(C1-1) is not affected by the actions of other users User(C1-2), User(C2-1) and User(C2-2).

In addition, a user can configure components between a child classifier and a child scheduler without requesting intervention or approval from their service provider, while the service provider can configure a child classifier and a child scheduler without intervention or approval from NP.

### Fifth Embodiment

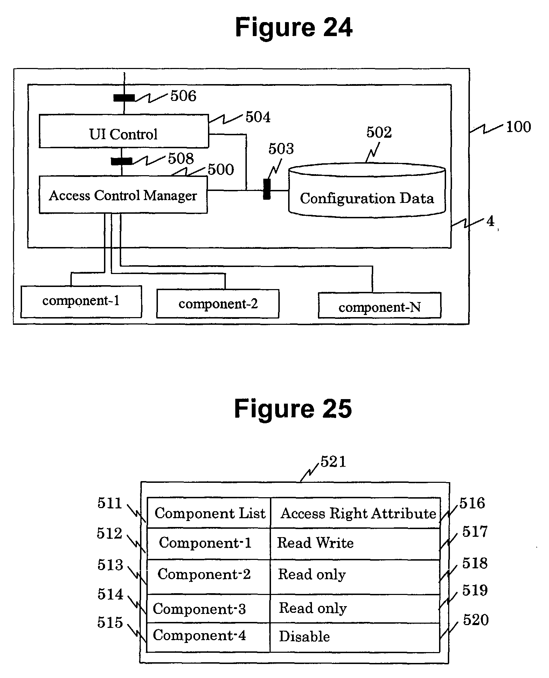

The node 100 of Figure 1 can be managed from an upper layer, or management plane. Figure 24 shows the management software structure of the access control component 4 of the node 100. The management software can be located within node 100 or in a separate management station. The management software comprises an access control manager 500, configuration data 502 and a User Interface (UI) control 504. Users of the management software, for example network operators, service managers, administrators of service providers or customers, can access to the management software through the UI control 504 in order to configure node components and/or to obtain information about the node. An interface 506 is provided through which the users access the management software. Various interfaces can be provided. For example, users may access to the UI control 504 through web browsers, another type of Graphical User Interface (GUI) or a remote procedure call.

The UI control 504 interacts with the access control manager 500 via an interface 508, so that the UI control 504 can call functions of the access control manager 500 to set configuration data or to obtain status information. The interface 508 of the access control manager 500 can be called remotely from other sites via a network.

The configuration database 502 stores configuration data and/or policy data. An interface 503 is provided for other components to store and retrieve data from the configuration database 502.

Each component of the node 100 has an application interface so that the components can communicate with each other. Figure 25 shows an example access right attributes list 521 for components of the node 100, which is stored in the configuration database 502. The first column of the list shows the names of components in the node 100 and can include both software and hardware components. The second column of the list shows the list of access right attributes, which, in this example, are expressed using terms such as "write", "read", "read write", "read only" and "disable".

In the node 100 of figure 1, access to the classifiers 51, 56, 60, 65, 70, 75, queues 61, 66, 71, 76 and schedulers 62, 67, 72, 77, 52, 57 can be controlled by the access control manager 500 in accordance with the access right attributes. For instance, component-1 has an access attribute 517 of "read write" whereas component-2 has an access right attribute 518 of "read only ". "read write" means that a user is able to access to component-1 in order to configure it and to retrieve information. "read only" means that the user is able to access to component-2 513 in order to get information, but the user cannot configure it. "disable" 520 means that the user is not able to access to the component-4 and, therefore, can neither configure it nor obtain information from it.

These attributes are defined in access control policy data in configuration database 502 using, for example, the Extensible Markup Language (XML) format. A plain text format could also be used for this purpose. The policy data is input through the UI control 504 or submitted through the network. The XML example is expressed as the followings;

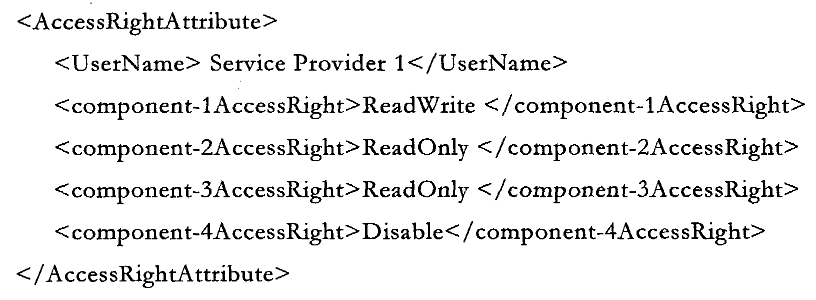

In this manner, network operators can assign limited access rights to customers, such as service providers and enterprises, while managing their own components within the node 100 securely. In addition, the network operators can delegate a task to a certain type of service provider together with appropriate access control attributes. For instance, a network provider can give a billing provider only "read only" attributes so that the billing provider can collect information from the node 100 for charging purposes, but cannot configure any components of the node 100. In another example, if there is a malicious attack on the node 100, the access attributes can be changed automatically to "disable" while the node 100 is recovered, for security purposes. In summary, the network operators can reduce their workload by delegation using the access control function of the invention.

In the above examples, IPv4 (Internet Protocol version four) packet header information is used to define a flow. However, the invention is not limited to nodes using this particular type of flow definition. IPv6 (Internet Protocol version six) packet header information, such as a flow label, may be used instead. It is not necessary to use an IP address to define or identify a flow, as indicated in headers of data packets belonging to the flow. Other types of identifier can be used, such as a marker in a payload of the data packet, where the flow definition data has been defined accordingly.

The invention is not limited to nodes with one or two sets of input ports and output ports. A node may comprise more than two input ports and two output ports, such as three input ports and three output ports etc. In addition, the invention is not limited to arrangements where the number of queue buffers provided in' the multiple queue components is two or three.

Furthermore, the invention may also be used with Asynchronous Transfer Mode (ATM) and Multi-protocol Label Switching (MPLS) networks.

## Claims

1. A network node (100, 101, 102) comprising:
a first layer of processing components comprising a first classifier (51, 56) and a first scheduler (52, 57);
a second layer of processing components comprising at least one second classifier (60, 65, 70, 75) and at least one second scheduler (62, 67, 72, 77); and
an access controller (4);
wherein the access controller (4, 104, 204, 304) is arranged to allow configuration of processing components (51, 56, 52, 57) in the first layer by a first user and to allow configuration of processing components (60, 62, 65, 67, 70, 72, 75, 77) in the second layer by one or more second users.

2. A network node (100,101, 102) according to claim 1, wherein:
the first classifier (51, 56) is configured to forward a data flow to one of the second classifiers (60, 65, 70, 75);
each second classifier (60, 65, 70, 75) is arranged to forward a received data flow for reception by a second scheduler (62, 67, 72, 77);
each second scheduler (62, 67, 72, 77) is arranged to forward the received data flow for reception by the first scheduler (52, 57); and
the first scheduler (52, 57) is configured to control onward transmission of data flows received from the one or more second schedulers (62, 67, 72, 77).

3. A network node (100, 101, 102) according to claim 1 or 2, wherein the access controller (4) is configured to associate access right attributes for the processing components (51, 52, 56, 57, 60, 62, 65, 67, 70, 72, 75, 77) with said first user and with said one or more second users.

4. A network node (100, 101, 102) according to claim 1, 2 or 3, wherein one or more identifiers (222, 224) are associated with the at least one second classifier (60, 65, 70, 75) and the first classifier (51, 56) is configured to:
extract information from the data flow;
compare the extracted information with said identifiers (222, 224); and
if the extracted information corresponds to one of said identifiers (222, 224), forward the data flow to the second classifier (60, 65, 70, 75) associated with said one identifier (222, 224).

5. A network node (100, 101, 102) according to claim 4, wherein the one or more identifiers (222, 224) are IP addresses.

6. A network node (100, 101, 102) according to any one of the preceding claims, wherein one or more first bandwidth limits (263, 265) are associated with said one or more second schedulers (62, 67, 72, 77) so that onward transmission of data flows from said one or more second schedulers (62, 67, 72, 77) is regulated in accordance with said first bandwidth limits (263, 265).

7. A network node (101, 102) according to any one of claims 1 to 6, wherein:
the second layer further comprises one or more markers (63, 68, 73, 78) operable to set a DSCP number to a packet in a received data flow; and
said access controller (104) is arranged to allow configuration of the one or more markers (63, 68, 73, 78) by one or more second users.

8. A network node (102) according to claim 7, wherein the first layer further comprises a first layer marker (81, 86) configured to:
receive a data flow from said one or more second schedulers (62, 67, 72, 77) ; and
set the DSCP of a packet in said data flow.

9. A network node according to any one of the preceding claims, further comprising a third layer, the third layer comprising at least one third classifier (160, 165, 170, 175) and at least one third scheduler (162, 167, 172, 177), wherein the access controller (304) is arranged to allow configuration of processing components (160, 165, 170, 175, 162, 167, 172, 177) in the third layer by one or more third users.

10. A network node according to claim 9, wherein:
one second classifier (151, 156) is configured to forward an incoming data flow to the at least one third classifier (160, 165, 170, 175);
said third classifier (160, 165, 170, 175) is arranged to forward a received data flow for reception by an associated third scheduler (162, 167, 172, 177); and
the third scheduler (162, 167, 172, 177) associated with said third classifier (160, 165, 170, 175) is arranged to forward the received data flow for reception by the one second scheduler (152, 157).

11. A network node according to claim 9 or 10, wherein one or more further identifiers (452, 454) are associated with the at least one third classifier (160, 165, 170, 175) and the second classifier (151, 156) is configured to:
extract information from the data flow;
compare the extracted information with said further identifiers (452, 454); and
if the extracted information corresponds to one of said further identifiers (452, 454), forward the data flow to the third classifier (160, 165, 170, 175) associated with said one further identifier.

12. A network node according to claim 9, 10 or 11, wherein said one second scheduler (152, 157) stores one or more second bandwidth limits (483, 485) associated with the at least one third scheduler (162, 167, 172, 177) and regulates onward transmission of data flows from said at least one third scheduler (162, 167, 172, 177) in accordance with said second bandwidth limits (483, 485).

13. A network node according to any one of claims 9 to 12, further comprising one or more further layers, each further layer comprising at least one classifier and at least one scheduler, wherein the access controller (304) is arranged to allow configuration of processing components in the further layer by one or more further users.

14. A network node (100, 101, 102) according to claim 4, 5 or 11, wherein said information is extracted from a header of a data packet.

15. A network node (100, 101, 102) according to claim 14, wherein the data packet is an IPv6 data packet.

16. A network node (100, 101, 102) according to claim 4, 5 or 11, wherein said information is extracted from a payload of a data packet.

17. A network node (100, 101, 102) according to any one of the preceding claims, wherein the first user is a network node provider (NP) and the one or more second users are service providers (SP(A1), SP(A2), SP(B1), SP(B2)).

18. A system comprising:
a network node (100, 101, 102) according to any one of the preceding claims;
a first user interface (90) operable to generate configuration data for the access controller (4) and for a processing component (51, 52, 56, 57) in the first layer; and
at least one second user interface (10, 20, 30, 40) operable to generate configuration data for a processing component (60, 62, 65, 67, 70, 72, 75, 77) in the second layer;
wherein said first and second user interfaces (10, 20, 30, 40, 90) are further operable to forward said configuration data to the network node (100, 101, 102).

19. A network node (100, 101, 102) comprising:
an input interface (50, 55);
a routing component (3);
a first layer of processing components comprising a first classifier (51, 56) and a first scheduler (52, 57);
a second layer of processing components comprising at least one second classifier (60, 65, 70, 75) and at least one second scheduler (62, 67, 72, 77); and
an access controller (4) comprising a database of access rights attributes;
wherein:
the input interface (50, 55) is configured to receive a request to access a processing component (51, 52, 56, 57, 60, 62, 65, 67, 70, 72, 75, 77) from a user interface (10, 20, 30, 40, 90);
the routing component (3) is configured to direct said request to the access controller (4); and
the access controller (4) is arranged to determine whether to allow the access request on the basis of information extracted from the request and information stored in its database.

20. A network node (100, 101, 102) according to claim 19, further comprising an output interface (53, 58), wherein:
the first classifier (51, 56) is configured to forward a data flow to one of the second classifiers (60, 65, 70, 75);
each second classifier (60, 65, 70, 75) is arranged to forward a received data flow for reception by a second scheduler (62, 67, 72, 77);
each second scheduler (62, 67, 72, 77) is arranged to forward the received data flow for reception by the first scheduler (52, 57); and
the first scheduler (52, 57) is configured to control onward transmission of data flows received from the one or more second schedulers (62, 67, 72, 77) via the output interface (53, 58).

21. A method of configuring a network node (100), which comprises a first layer of processing components comprising a first classifier (51, 56) and a first scheduler (52, 57), a second layer of processing components comprising at least one second classifier (60, 65, 70, 75) and at least one second scheduler (62, 67, 72, 77) and an access controller (4), said method comprising the steps of:
generating access control policy data by associating access right attributes for the processing components (51, 52, 56, 57, 60, 62, 65, 67, 70, 72, 75, 77) to a plurality of users;
receiving a configuration request, which identifies a source of the request and one processing component (51, 52, 56, 57, 60, 62, 65, 67, 70, 72, 75, 77) to be configured;
determining whether the source is permitted to configure the one processing component (51, 52, 56, 57, 60, 62, 65, 67, 70, 72, 75, 77) using said access control policy data; and
in response to a positive determination, accepting said request.

22. A method of receiving and transmitting data in a network node (101), which comprises at least one first classifier (51, 56) and at least one first scheduler (52, 57) arranged in a first layer for control by a first user and at least one second classifier (64, 69, 74, 79) and at least one second scheduler (62, 67, 72, 77) arranged in a second layer for control by a second user, comprising the steps of:
receiving a data flow at a first classifier (51, 56) and forwarding the data flow to a second classifier (64, 69, 74, 79);
receiving the data flow at the second classifier (64, 69, 74, 79) and forwarding the data flow to a local marker (63, 68, 73, 78), which assigns a DSCP value to data packets within the data flow and forwards the flow for reception by a second scheduler (62, 67, 72, 77);
regulating the data flow at a second scheduler (62, 67, 72, 77), which is arranged to forward the received data flow for reception by the first scheduler (52, 57); and
regulating onward transmission of the data flow at the first scheduler (52, 57).

23. A method according to claim 22, further comprising replacing the DSCP value assigned by the local marker (63, 68, 73, 78) before the onward transmission of the data flow.
